# EUROPÄISCHE PATENTSCHRIFT

(11) **EP 3 811 511 B1**
(45) Veröffentlichungstag und Bekanntmachung des Hinweises auf die Patenterteilung: **03.06.2026**
(21) Anmeldenummer: 19737649.4
(22) Anmeldetag: 18.06.2019
(51) Int. Cl.: H02N 2/04, G02B 7/00

(54) **VERSTELLVORRICHTUNG**
ADJUSTING DEVICE
DISPOSITIF DE RÉGLAGE

(30) Priorität: 22.06.2018 DE 102018115086
(43) Veröffentlichungstag der Anmeldung: 28.04.2021
(73) Patentinhaber: Physik Instrumente (PI) SE & Co. KG, 76228 Karlsruhe (DE)
(72) Erfinder: NAVRATIL, Tomas, 76137 Karlsruhe (DE)
(74) Vertreter: Keller Schneider Patentanwaltsgesellschaft mbH
(86) Internationale Anmeldenummer: PCT/DE2019/100559
(87) Internationale Veröffentlichungsnummer: WO 2019/242814

(56) Entgegenhaltungen:
- CN-U- 204 906 221
- DE-A1- 19 916 277
- DE-A1- 3 626 507
- RU-C1- 2 603 353

## Beschreibung

Die Erfindung betrifft eine Verstellvorrichtung nach Anspruch 1.

Aus den Druckschriften DE 36 26 507 A1, CN 204906221 U, RU 2 603 353 C1, US 6 465 936 B1 ist jeweils eine Verstellvorrichtung bekannt, bei der durch serielle Anordnung bzw. durch eine Stack-Anordnung einzelner Linearversteller der bezüglich eines einzelnen Linearverstellers begrenzte Verstellweg vergrößert wird.

Auch die Druckschrift US 5,729,077 offenbart eine Verstellvorrichtung mit einer seriellen Anordnung von Linearverstellern, welche jeweils aus einer elektroaktiven Keramik und daran angeordneten und konvex geformten Metallblechen gebildet sind.

Der wesentliche Nachteil bei einer solchen aus mehreren hintereinander angeordneten Linearverstellern gebildeten Verstellvorrichtung ist der in Erstreckungsrichtung des Stack benötigte große Raumbedarf. Somit scheidet eine solche Verstellvorrichtung aus für Anwendungen, wo nur eine geringes Baumaß in einer Richtung, die mit der Richtung des Verstellwegs zusammenfällt, vorhanden ist.

Die Druckschrift DE 10 2005 016 960 A1 beschreibt demgegenüber einen Linearaktor, bei dem zwischen Anschlusselementen mehrere piezoaktive Elemente in Reihenschaltung nebeneinanderliegend angeordnet sind, wobei für eine Hubbewegung der Anschlusselemente bzw. eines Anschlusselements einzelne der piezoaktiven Elemente so beaufschlagt werden, dass sich eine Expansionsbewegung ergibt, während die an diesen angeordneten piezoaktiven Elemente so beaufschlagt werden, dass sich eine Kontraktionsbewegung ergibt, so dass eine Vervielfältigung des Hubs des einzelnen piezoaktiven Elemente resultiert, ohne, dass eine Verlängerung des Aktors notwendig ist.

In ähnlicher Weise beschreibt die DE 19916 277 A1 eine platzsparende Vorrichtung zur Bewegung eines Objektes mit wenigstens zwei getrennt elektrisch ansteuerbaren piezoelektrischen Bewegungselementen und einer Wirkverbindung zwischen den piezoelektrischen Bewegungselementen derart, dass sich die resultierenden

Längenänderungen der piezoelektrischen Bewegungsmittel zu einer Gesamtlänge so addieren können, dass die maximal mögliche Länge der Bewegung in einer Dimension größer ist als die maximal mögliche Längenveränderung eines einzelnen piezoelektrischen Bewegungsmittels.

Auch die US 6,140,742 offenbart teleskopartig ineinander verschachtelte piezoelektrische Bewegungselemente, die so miteinander gekoppelt sind, dass die Gesamtstellbewegung der entsprechenden Verstellvorrichtung der Summe der Längen der Bewegungselemente entspricht.

Bei der Druckschrift WO2017/176209 A1 sind piezoelektrische Aktoren in über den Umfang verteilten Aussparungen eines Verbindungselements angeordnet, wobei die Längenänderung der darin angeordneten Aktoren in entgegengesetzten Richtungen wirken. Durch mehrfaches Ineinanderschachteln lässt sich auf platzsparende Weise eine Vervielfachung des Stellweges eines einzelnen Aktors erreichen.

Die Druckschriften GB 2550155 A, US 9,523,294 B2, US 4,952,835 und DE 10 2016 116 763 A1 offenbaren jeweils Linearversteller, die einen Aktor und ein den Aktor umgebendes Rahmenelement umfassen, wobei das Rahmenelement eine über Festkörpergelenke realisierte Hebelübersetzungseinrichtung aufweist, um darüber eine Vergrößerung des geringen Aktorstellwegs zu erzielen.

Der Druckschrift US 6,246,132 B1 ist eine Verstellvorrichtung zu entnehmen, die im Push-Pull-Betrieb arbeitet. Hierbei generiert eine erste Aktoreinheit eine Verstellbewegung eines mit der ersten Aktoreinheit gekoppelten Verstellelements in einer ersten Richtung, und eine zweite Aktoreinheit, die fest mit der ersten Aktoreinheit verbunden ist, eine Verstellbewegung des Verstellelements in einer zweiten und zur ersten Richtung entgegengesetzten Richtung.

Es ist Aufgabe der Erfindung, eine Verstellvorrichtung bereitzustellen, die durch Kumulierung des Stellwegs mehrerer Linearversteller eine Stellwegsvergrößerung realisiert und dabei zugleich ein kompaktes Baumaß in einer Richtung, welcher der Richtung des Verstellwegs der Verstellvorrichtung entspricht, erlaubt.

Diese Aufgabe wird gelöst durch eine Verstellvorrichtung gemäß Anspruch 1, wobei die sich daran anschließenden Unteransprüche mindestens zweckmäßige Weiterbildungen beschreiben.

Der im nachfolgenden Teil der Beschreibung gelegentlich verwendete Begriff ,im Wesentlichen' im Zusammenhang mit der Angabe von geometrischen Daten wie Winkeln, Dimensionen, Lagen, Orientierungen oder Richtungen ist so zu verstehen, dass die entsprechenden geometrischen Daten eine Abweichung von +/- 5% gegenüber dem jeweils angegebenen geometrischen Datum haben können, wobei diese Abweichung beispielsweise auf Fertigungs- oder Montagetoleranzen zurückzuführen ist.

Die erfindungsgemäße Verstellvorrichtung umfasst wenigstens zwei nebeneinanderliegend angeordnete Linearversteller, wovon jeder mindestens ein den jeweiligen Linearversteller antreibendes Stellelement aufweist. Bei jedem der Linearversteller sind zwei auf gegenüberliegenden Seiten des Stellelements angeordnete Stellabschnitte vorhanden. Insgesamt besitzt die erfindungsgemäße Verstellvorrichtung wenigstens vier Stellabschnitte, wovon ein Stellabschnitt einer ortsfesten Anordnung an einer übergeordneten Einheit dient. Ein weiterer Stellabschnitt der insgesamt wenigstens vier Stellabschnitte ist dazu vorgesehen, dass an ihm ein gegenüber der übergeordneten Einheit um einen definierten Verstellweg zu bewegendes Element angeordnet ist.

Benachbarte Linearversteller sind über jeweils einen ihrer Stellabschnitte fest miteinander verbunden sind, so dass eine Verstellbewegung eines Linearverstellers auf den benachbarten Linearversteller übertragbar ist. Mit anderen Worten wird ein Linearversteller durch den anderen Linearversteller um einen definierten Stellweg verschoben bzw. bewegt.

Einer der Linearversteller ist dazu eingerichtet, durch Betätigen des Stellelements eine Abstandsvergrößerung zwischen den an ihm angeordneten Stellabschnitten zu bewirken, während ein benachbarter Linearversteller dazu eingerichtet ist, durch Betätigen des Stellelements eine Abstandsverkleinerung zwischen den an ihm angeordneten Stellabschnitten zu bewirken. Der Betrag der Abstandsvergrößerung des entsprechenden Linearverstellers entspricht dem Verstellweg dieses Linearverstellers; analog entspricht der Betrag der Abstandsverkleinerung des benachbarten Linearverstellers dem Verstellweg dieses Linearverstellers. Aufgrund der festen Verbindung der Linearversteller ist somit ein Verstellweg der Verstellvorrichtung realisierbar, welcher der Summe der Beträge der Abstandsänderungen zwischen den Stellabschnitten der Linearversteller bzw. der Summe der Verstellwege der jeweiligen Linearversteller entspricht. Durch die nebeneinanderliegende Anordnung der Linearversteller wird dabei erreicht, dass die Ausdehnung der Verstellvorrichtung in einer Richtung, die im Wesentlichen der Richtung des Verstellwegs der Verstellvorrichtung entspricht, vergleichsweise gering bleibt.

Die Erfindung zeichnet sich dadurch aus, dass wenigstens einer der Linearversteller eine Hebelübersetzungseinrichtung umfasst, und das Stellelement eine langgestreckte Form aufweist und in einen Festkörpergelenke aufweisenden Rahmen des Linearverstellers eingesetzt ist, wobei die Verstellbewegungen der Linearversteller in der gleichen Richtung erfolgen.

Es kann von Vorteil sein, dass die Stellabschnitte benachbarter Linearversteller über ein Kopplungselement miteinander verbunden sind. Damit gelingt die mechanische Kopplung bzw. feste Verbindung der entsprechenden Stellabschnitte besonders einfach. Insbesondere kann dadurch auch eine lösbare Verbindung zwischen den Stellabschnitten realisiert werden.

Es kann ebenso von Vorteil sein, dass das Stellelement ein elektromechanisches Element ist, welches bevorzugt piezoelektrisches Material umfasst. Piezoelektrische Stellelemente, auch Piezoaktoren genannt, weisen insbesondere eine hohe Steifigkeit auf und erlauben Verstellbewegungen mit einer sehr hohen Auflösung.

Es kann vorteilhaft sein, dass sich die Struktur der Rahmen benachbarter Linearversteller voneinander unterscheidet. Die unterschiedliche Struktur bzw. der unterschiedliche Aufbau der Rahmen benachbarter Linearversteller ermöglicht es, bei Verwendung gleicher Stellelemente mit identischem Längenänderungsverhalten unterschiedliche Relativbewegungen der Stellabschnitte zueinander bei den verschiedenen Linearverstellern hervorzurufen.

Es kann zusätzlich vorteilhaft sein, dass die beiden Stellabschnitte eines Linearverstellers einstückig mit dem Rahmen ausgeführt sind. Dies erlaubt eine besonders kompakte und einfach zu montierende Ausführung der Linearversteller.

Weiterhin kann es von Vorteil sein, dass die Richtung der Verstellbewegung eines Stellabschnitts im Wesentlichen senkrecht zur Erstreckungsrichtung des Stellelements angeordnet ist. Hierdurch kann selbst bei einer großen Länge des Stellelements eine Verstellvorrichtung realisiert werden, deren Ausdehnung in einer Richtung, die mit der Richtung der Verstellbewegung des Stellabschnitts zusammenfällt, vergleichsweise gering ist und so in der entsprechenden Richtung ein kompaktes Baumaß erzielt werden kann.

Die Erfindung betrifft zudem eine Positioniervorrichtung für optische Elemente mit einer zuvor beschriebenen Verstellvorrichtung.

Vorteile und Zweckmäßigkeiten der Erfindung werden deutlicher aus der nachfolgenden Beschreibung bevorzugter Ausführungsbeispiele anhand der Figuren. Hierbei zeigen:
Figur 1: Perspektivische Darstellung einer erfindungsgemäßen Verstellvorrichtung
Figur 2: Weitere perspektivische Darstellung der erfindungsgemäßen Verstellvorrichtung nach Figur 1
Figur 3: Seitenansicht der erfindungsgemäßen Verstellvorrichtung nach Figur 1
Figur 4: Explosionsdarstellung der erfindungsgemäßen Verstellvorrichtung nach Figur 1

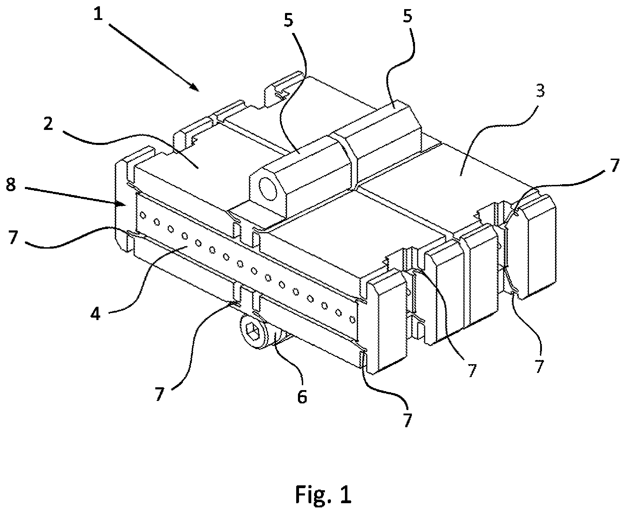

Die erfindungsgemäße Verstellvorrichtung 1 nach Figur 1 weist zwei direkt nebeneinanderliegende und in gegenseitiger Überdeckung zueinander angeordnete Linearversteller 2 und 3 auf, wobei jeder Linearversteller einen Rahmen 8 mit darin eingesetzten Stellelementen 4 in Form von piezoelektrischen Aktoren umfasst. Jeder der beiden Rahmen 8 weist zahlreiche über seinen Umfang verteilte Festkörpergelenke 7 und zwei einstückig oder integral mit diesem ausgeführte Stellabschnitte 5 auf. Die beiden Stellabschnitte 5 eines Linearverstellers 2, 3 sind hierbei auf gegenüberliegenden Seiten der Stellelemente 4 bzw. auf gegenüberliegenden Seiten des jeweiligen Rahmens 8 angeordnet.

Die in Figur 1 unten liegenden Stellabschnitte 5, von denen nur der Stellabschnitt 5 des Linearverstellers 2 zu sehen ist, sind über ein Kopplungselement 6 in Form einer Schraube fest miteinander verbunden.

Beide Linearversteller 2, 3 weisen eine Hebelübersetzungseinrichtung auf, realisiert durch die einzelnen Abschnitte bzw. Schenkel des Rahmens 8, wobei jeweils benachbarte Abschnitte oder Schenkel über Festkörpergelenke 7 miteinander verbunden sind. Obwohl in Figur 1 nicht zu erkennen, weicht der Aufbau bzw. die Struktur des Rahmens 8 des Linearverstellers 2 vom dem bzw. der des Rahmens 8 des Linearverstellers 3 ab, wobei die einzelnen Abschnitte bzw. Schenkel der Rahmen 8 im Wesentlichen identisch sind. Die Unterschiede liegen in erster Linie in verschieden ausgebildeten Festkörpergelenken, die dafür sorgen, dass bei gleichsinniger Längenänderung der Stellelemente 4 die Stellabschnitte 5 der beiden Linearversteller 2, 3 unterschiedliche Relativbewegungen zueinander zeigen.

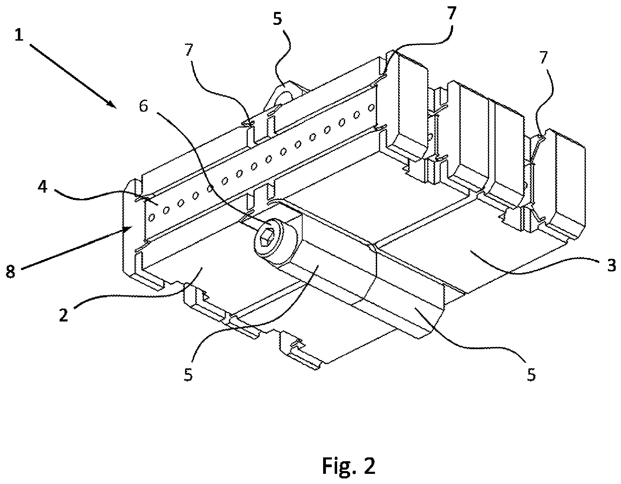

Figur 2 zeigt die erfindungsgemäße Verstellvorrichtung 1 nach Figur 1 in einer anderen perspektivischen Darstellung, so dass hier die in Figur 1 weitgehend verdeckte Unterseite der Verstellvorrichtung zu erkennen ist. Dabei wird insbesondere die feste Verbindung der beiden direkt nebeneinanderliegenden Stellabschnitte 5 der Linearversteller 2 und 3 mittels Kopplungselement 6 in Form einer Schraube verdeutlicht.

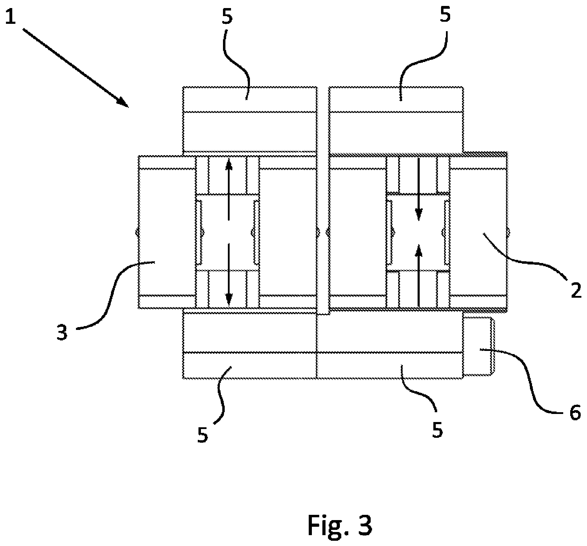

Figur 3 zeigt eine Seitenansicht der erfindungsgemäßen Verstellvorrichtung 1 nach Figur 1 bzw. Figur 2. Die in Figur 3 eingezeichneten Pfeile verdeutlichen hierbei die unterschiedliche gegenseitige Relativbewegung der beiden Stellabschnitte 5 der Linearversteller 2 und 3. Während der in Figur 3 linke Linearversteller 3 dazu eingerichtet ist, bei Betätigung der Stellelemente 4 für eine Bewegung seiner Stellabschnitte 5 zu sorgen, bei welcher sich diese voneinander weg bewegen bzw. bei welcher der Abstand zwischen diesen vergrößert wird, ist der in Figur 3 rechte Linearversteller 2 dazu eingerichtet, bei Betätigung der Stellelemente 4 für eine Bewegung seiner Stellabschnitte 5 zu sorgen, bei welcher sich diese aufeinander zu bewegen bzw. bei welcher der Abstand zwischen diesen verkleinert bzw. verringert wird.

Der in Figur 3 obere Stellabschnitt 5 des linken Linearverstellers 3 ist zu einer ortsfesten Verbindung mit einer in Figur 3 nicht gezeigten übergeordneten Einheit vorgesehen, so dass sich durch Bestätigung der Stellelemente 4 des Linearverstellers 3 effektiv nur der untere Stellabschnitt 5 bewegt, und zwar mit einer von dem oberen Stellabschnitt 5 des Linearverstellers 3 weg gerichteten Bewegung. Der entsprechende Stellweg oder Verstellweg des unteren Stellabschnitts 5 des Linearverstellers 3 entspricht der Abstandsvergrößerung zwischen den beiden gegenüberliegend angeordneten Stellabschnitten 5.

Aufgrund der festen Verbindung des unteren Stellabschnitts 5 des in Figur 3 linken Linearverstellers 3 mit dem unteren Stellabschnitt 5 des in Figur 3 rechten Linearverstellers 2 über das Kopplungselement 6 resultiert aus der vorstehend beschriebenen Bewegung des unteren Stellabschnitts 5 des Linearverstellers 3 eine analoge Bewegung des benachbarten Linearverstellers 2. Mit anderen Worten wird die Bewegung des unteren Verstellabschnitts 5 des Linearverstellers 3 auf den gesamten Linearversteller 2 und damit auch auf den oberen Stellabschnitt 5 des in Figur 3 rechten Linearverstellers 2 übertragen.

Der obere Stellabschnitt 5 des in Figur 3 rechten Linearverstellers 2 ist dazu vorgesehen, dass an ihm ein gegenüber der übergeordneten Einheit zu verstellendes bzw. bewegendes Element angeordnet ist. Dieser Stellabschnitt 5 wird, wie vorstehend erläutert, einerseits über die Verstellbewegung des benachbarten Linearverstellers 3 bewegt bzw. verstellt, und andererseits aufgrund einer Betätigung der Stellelemente 4 des Linearverstellers 2. Wie zuvor beschrieben, ist der Linearversteller 2 dazu eingerichtet, bei Betätigung der Stellelemente 4 für eine Bewegung seiner Stellabschnitte 5 zu sorgen, bei welcher sich diese aufeinander zu bewegen bzw. bei welcher der Abstand zwischen diesen verkleinert bzw. verringert wird. Dabei sind die beiden Verstellbewegungen um eine im Wesentlichen identische Strecke in der gleichen Richtung angeordnet und addieren sich somit. Insgesamt resultiert mit der erfindungsgemäßen Verstellvorrichtung bei kompaktem Baumaß ein vergrößerter Verstellweg.

Es ist denkbar, dass sich an den in Figur 3 rechten Linearversteller 2 ein weiterer Linearversteller anschließt, wobei dieser wiederum über einen seiner Stellabschnitte 5 fest mit dem oberen Stellabschnitt 5 des Linearverstellers 2 verbunden ist. Somit wäre es möglich, bei immer noch kompakten Abmessungen den Verstellweg des Stellabschnitts, an welchem ein zu verstellendes Element angeordnet ist, weiter zu vergrößern.

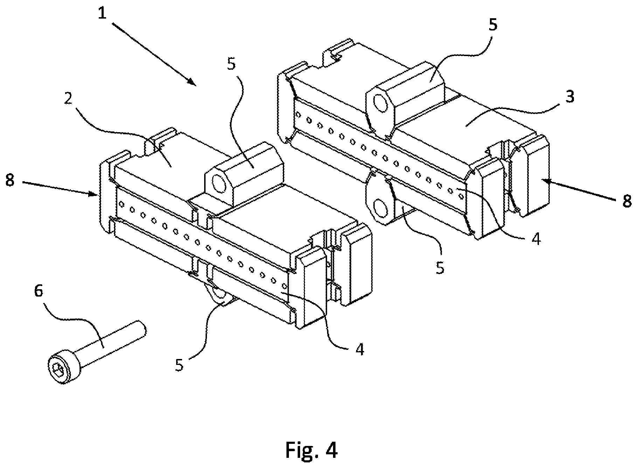

Figur 4 zeigt die erfindungsgemäße Verstellvorrichtung 1 in einer Explosionsdarstellung. Bei dieser Darstellung sind die Unterschiede im Aufbau bzw. der Struktur der Rahmen 8 der Linearversteller 2 und 3 und ihrer jeweiligen Festkörpergelenke 7 deutlicher zu erkennen. Hierbei ist der Rahmen 8 bzw. sind dessen Festkörpergelenke 7 des in Figur 4 linken Linearverstellers 2 derart ausgebildet, dass sich bei einer Vergrößerung der Länge des Stellelements 4 in Form eines piezoelektrischen Aktors die beiden bezüglich des Stellelements 4 auf gegenüberliegenden Seiten angeordneten Stellabschnitte 5 aufeinander zu bewegen. Demgegenüber ist der Rahmen 8 bzw. sind dessen Festkörpergelenke 7 des in Figur 4 rechten Linearverstellers 3 derart ausgebildet, dass sich bei einer Vergrößerung der Länge des Stellelements 4 in Form eines piezoelektrischen Aktors die beiden bezüglich des Stellelements 4 auf gegenüberliegenden Seiten angeordneten Stellabschnitte 5 voneinander weg bewegen.

Daneben ist es möglich, dass die Linearversteller einen identisch aufgebauten Rahmen 8 mit identisch ausgebildeten Festkörpergelenken 7 besitzen, wobei die unterschiedlichen Relativbewegungen der Stellabschnitte 5 zueinander durch unterschiedliche Längenänderungsrichtungen der Stellelemente 4 realisiert werden, etwa durch eine Längenvergrößerung eines Stellelements 4 und eine Längenreduktion eines anderen Stellelements 4. Hierbei ist denkbar, dass für die unterschiedlichen Linearversteller unterschiedliche Arten von Stellelementen eingesetzt sind.

### Bezugszeichenliste

- 1: Verstellvorrichtung
- 2, 3: Linearversteller
- 4: Stellelement
- 5: Stellabschnitt
- 6: Kopplungselement
- 7: Festkörpergelenk
- 8: Rahmen (des Linearverstellers 2 bzw. 3)

## Patentansprüche

1. Verstellvorrichtung (1) umfassend wenigstens zwei nebeneinander liegend angeordnete Linearversteller (2, 3), wobei jeder Linearversteller (2, 3) wenigstens ein Stellelement (4) mit einer langgestreckten Form und zwei auf gegenüberliegenden Seiten des Stellelements (4) angeordnete Stellabschnitte (5) aufweist, und von den insgesamt wenigstens vier Stellabschnitten (5) ein Stellabschnitt (5) eines ersten Linearverstellers (2, 3) einer ortsfesten Anordnung an einer übergeordneten Einheit dient und ein Stellabschnitt (5) eines zweiten Linearverstellers (2, 3) einer Anordnung eines gegenüber der übergeordneten Einheit um einen definierten Verstellweg zu bewegenden Elements oder eines Stellabschnitts (5) eines weiteren Linearverstellers (2, 3) daran dient, und benachbarte Linearversteller (2, 3) über jeweils einen Stellabschnitt (5) fest miteinander verbunden sind, so dass eine Verstellbewegung eines Linearverstellers auf den benachbarten Linearversteller übertragbar ist, wobei die Linearversteller (2, 3) Hebelübersetzungseinrichtungen mit einem Rahmen (8) mit Festkörpergelenken (7), in den das jeweilige Stellelement (4) eingesetzt ist, aufweisen,
**dadurch gekennzeichnet, dass** die Stellabschnitte (5) der beiden Linearversteller (2, 3) auf gegenüberliegenden Seiten des jeweiligen Rahmens (8) angeordnet sind, dass der mit der übergeordneten Einheit koppelbare Stellabschnitt (5) und der mit dem zu bewegenden Element oder dem weiteren Linearversteller (2, 3) koppelbare Stellabschnitt (5) in Bezug auf den Verstellweg der Verstellvorrichtung (1) auf derselben Seite der Kombination des ersten und zweiten Linearverstellers (2, 3) liegen, dass ein Linearversteller (2, 3) dazu eingerichtet ist, durch Betätigen des Stellelements (4) eine Abstandsvergrößerung zwischen den an ihm angeordneten Stellabschnitten (5) zu bewirken, und dass ein benachbarter Linearversteller (2, 3) dazu eingerichtet ist, durch Betätigen des Stellelements (4) eine Abstandsverkleinerung zwischen den an ihm angeordneten Stellabschnitten (5) zu bewirken, wodurch die Verstellbewegungen des ersten und des zweiten Linearverstellers (2, 3) in der gleichen Richtung erfolgen und sich ein Verstellweg der Verstellvorrichtung realisiert, welcher der Summe der Beträge der Abstandsänderungen zwischen den Stellabschnitten der Linearversteller entspricht.

2. Verstellvorrichtung nach Anspruch 1, **dadurch gekennzeichnet, dass** die Stellabschnitte (5) benachbarter Linearversteller (2, 3) über ein Kopplungselement (6) miteinander verbunden ist.

3. Verstellvorrichtung nach Anspruch 1 oder 2, **dadurch gekennzeichnet, dass** das Stellelement (4) ein elektromechanisches Element ist, welches bevorzugt piezoelektrisches Material umfasst.

4. Verstellvorrichtung nach einem der vorhergehenden Ansprüche, **dadurch gekennzeichnet, dass** sich die Struktur der Rahmen (9) benachbarter Linearversteller (2, 3) voneinander unterscheidet.

5. Verstellvorrichtung nach einem der vorhergehenden Ansprüche, **dadurch gekennzeichnet, dass** die beiden Stellabschnitte (5) eines Linearverstellers (2, 3) einstückig mit dem Rahmen (8) ausgeführt sind.

6. Verstellvorrichtung nach einem der vorhergehenden Ansprüche, **dadurch gekennzeichnet, dass** die Richtung der Verstellbewegung eines Stellabschnitts (5) im Wesentlichen senkrecht zur Erstreckungsrichtung des Stellelements (4) angeordnet ist.

7. Positioniervorrichtung für optische Elemente mit einer Verstellvorrichtung nach einem der vorhergehenden Ansprüche.

## Claims

1. Adjustment device (1) which comprises at least two adjacently arranged linear adjusters (2, 3), wherein each linear adjuster (2, 3) comprises at least one adjustment element (4) having an elongated shape and two adjustment sections (5) arranged on opposite sides of the adjustment element (4), and wherein one adjustment section (5) of a first linear adjuster (2, 3) of the total of at least four adjustment sections (5) is used for a fixed arrangement on a higher-level unit and wherein an adjustment section (5) of a second linear adjuster (2, 3) is used for an arrangement of an element to be moved or of an adjustment section (5) of a further linear adjuster (2, 3) each of which to be moved by a defined adjustment way relative to the higher-level unit thereon, and wherein adjacent linear adjusters (2, 3) in each case are each firmly connected to one another via a respective adjustment section (5) so that an adjusting movement of a linear adjuster is transferable to the neighboring linear adjuster, wherein the linear adjusters (2, 3) comprise lever transmission devices with a frame (8) with flexure hinges (7) in which the respective adjustment element (4) is inserted,
**characterized in that** the adjustment sections (5) of the two linear adjusters (2, 3) are arranged on opposite sides of the respective frame (8), that the adjustment section (5) that can be coupled to the superior unit and the adjustment section (5) that can be coupled to the element to be moved or to the further linear adjuster (2, 3) are located on the same side of the combination of the first and second linear adjusters (2, 3) with respect to the adjustment path of the adjustment device (1), that a linear adjuster (2, 3) is configured to effect an increase in the distance between the adjustment sections (5) which are arranged on it by actuating the adjustment element (4), and that an adjacent linear adjuster (2, 3) is configured to effect a decrease in the distance between the adjustment sections (5) which are arranged on it by actuating the adjustment element (4), whereby the adjustment movements of the first and second linear adjusters (2, 3) occur in the same direction and an adjustment path of the adjustment device is realized, which corresponds to the sum of the amounts of the distance changes between the adjustment sections of the linear adjusters.

2. Adjustment device according to claim 1, **characterized in that** the adjustment sections (5) of adjacent linear adjusters (2, 3) are connected to one another via a coupling element (6).

3. Adjustment device according to claim 1 or 2, **characterized in that** the adjustment element (4) is an electromechanical element, which preferably comprises piezoelectric material.

4. Adjustment device according to one of the preceding claims, **characterized in that** the structure of the frames (9) of adjacent linear adjusters (2, 3) differs from one another.

5. Adjustment device according to one of the preceding claims, **characterized in that** the two adjustment sections (5) of one linear adjuster (2, 3) are formed integrally with the frame (8).

6. Adjustment device according to one of the preceding claims, **characterized in that** the direction of the adjustment movement of an adjustment section (5) is disposed essentially perpendicular to the direction of extension of the adjustment element (4).

7. Positioning device for optical elements with an adjustment device according to one of the preceding claims.

## Revendications

1. Dispositif de réglage (1), comprenant au moins deux régleurs linéaires (2, 3), placés en étant situés côte à côte, chaque régleur linéaire (2, 3) comportant au moins un actionneur (4) d'une forme allongée et deux sections de réglage (5) placées sur des côtés opposés de l'actionneur (4) et parmi les au moins quatre sections de réglage (5) au total, une section de réglage (5) d'un premier régleur linéaire (2, 3) servant à un placement stationnaire sur une unité supérieure et une section de réglage (5) d'un deuxième régleur linéaire (2, 3) servant à un placement d'un élément devant être déplacé de la valeur d'une course de réglage définie par rapport à l'unité supérieure ou d'une section de réglage (5) d'un autre régleur linéaire (2, 3) sur celui-ci et des régleurs linéaires (2, 3) voisins étant fixement assemblés l'un avec l'autre par l'intermédiaire de chaque fois une section de réglage (5), de telle sorte qu'un déplacement de réglage d'un régleur linéaire soit transmissible sur le régleur linéaire voisin, les régleurs linéaires (2, 3) comportant des systèmes de transmission à levier pourvus d'un cadre (8) avec des articulations monolithiques (7), dans lesquelles l'actionneur (4) respectif est inséré,
**caractérisé en ce que** les sections de réglage (5) des deux régleurs linéaires (2, 3) sont placées sur des côtés opposés du cadre (8) respectif, **en ce qu'**en rapport au trajet de réglage du dispositif de réglage (1), la section de réglage (5) susceptible d'être accouplée avec l'unité directrice et la section de réglage (5) susceptible d'être accouplée avec l'élément qui doit être déplacé et avec l'autre régleur linéaire (2, 3) se situent du même côté de l'association du premier et du deuxième régleurs linéaires (2, 3), **en ce qu'**un régleur linéaire (2, 3) est configuré pour provoquer, par actionnement de l'actionneur (4) un agrandissement de l'écart entre les sections de réglage (5) placées sur celui-ci et **en ce qu'**un régleur linéaire (2, 3) est configuré pour provoquer, par actionnement de l'actionneur (4) une réduction de l'écart entre les sections de réglage (5) placées sur celui-ci, suite à quoi les déplacements de réglage du premier et du deuxième régleurs linéaires (2, 3) ont lieu dans la même direction et il se réalise un trajet de réglage du dispositif de réglage, lequel correspond à la somme des montants des modifications des écarts entre les sections de réglage der régleurs linéaires.

2. Dispositif de réglage selon la revendication 1, **caractérisé en ce que** les sections de réglage (5) de régleurs linéaires (2, 3) voisins sont assemblées les unes avec les autres par l'intermédiaire d'un élément d'accouplement (6).

3. Dispositif de réglage selon la revendication 1 ou 2, **caractérisé en ce que** l'actionneur (4) est un élément électromécanique, lequel comprend de préférence une matière piézoélectrique.

4. Dispositif de réglage selon l'une quelconque des revendications précédentes, **caractérisé en ce que** la structure des cadres (9) de régleurs linéaires (2, 3) voisins se différencie l'une de l'autre.

5. Dispositif de réglage selon l'une quelconque des revendications précédentes, **caractérisé en ce que** les deux sections de réglage (5) d'un régleur linéaire (2, 3) sont conçues en monobloc avec le cadre (8).

6. Dispositif de réglage selon l'une quelconque des revendications précédentes, **caractérisé en ce que** la direction du déplacement de réglage d'une section de réglage (5) est placée sensiblement à la perpendiculaire de la direction d'extension de l'actionneur (4).

7. Dispositif de positionnement destiné à des éléments optiques, pourvu d'un dispositif de réglage selon l'une quelconque des revendications précédentes.
